# EUROPEAN PATENT APPLICATION

(11) **EP 3 064 068 A2**
(43) Date of publication of application: **07.09.2016**
(21) Application number: 16158258.0
(22) Date of filing: 02.03.2016
(51) Int. Cl.: A22C 17/00, A22C 15/00

(54) **HANDLING SUPPORT**

(30) Priority: 06.03.2015 NL 2014416
(71) Applicant: Serendipity B.V., 7006 RW Doetinchem (NL)
(72) Inventor: Leuver, Frank Christiaan, 7006 RW Doetinchem (NL)
(74) Representative: van Essen, Peter Augustinus

(57) **Abstract**

The invention pertains to a handling support (1) for conveying material parts, in particular meat portions, and comprising an upright (2,3) linked at one end to an eye (6) for attaching to an automatic conveying member, the upright including a plurality of attachment members (4) for attaching the material parts to be conveyed, wherein said handling support is made as one part from plastic and wherein said attachment members (4) comprise skewers (22) which comprise a pointed end (25) at a distance from said upright (2,3) for allowing skewing said material parts onto said handling support.

## Description

### Field of the invention

The present invention relates to a handling support, notably for a system for conveying objects continuously, from one processing station to another, used in various automated production lines comprising a continuous overhead conveyor provided with load attachment hooks, particularly in the food industry where this support is appropriate for conveying meat cuts.

### Background of the invention

Supports are known for such applications for suspending pieces of meat, as described in the Dutch Patent No. 191771, published on 14-1-1996, which discloses a support consisting of a straight stem of generally flat shape and decreasing cross section, including at its widest end an orifice for attachment to an automatic conveying member and on its lateral faces a plurality of slots intended to receive links for attaching objects such as cords used for attaching cuts of meat.

EP2443931 discloses a handling support, notably for a continuously suspended object conveying system, consisting of two parallel uprights linked at one end to a reinforced hoop for attaching to an automatic conveying member, a plurality of spacers ensuring that the uprights are maintained in the parallel position, which uprights include, on an opposite face, a plurality of members for attaching the objects to be conveyed, these uprights being in the form of a flat central stem complemented at the edge with laterally positioned perpendicular ribs, the top part of the support which supports all the weights and the loads that are attached thereto being reinforced by a widening of the uprights linked by hoops of equivalent width, the whole being provided with double edge ribs complemented with transversal ribs.

### Summary of the invention

It is an aspect of the invention to provide a handling support that is relatively easy and cheap to produce. Furthermore or alternatively, it is an aspect of the invention to provide a handling support that allows improved handling efficiency. Furthermore or alternatively, it is an aspect of the invention to provide a handling support that allows handling of a relatively heavy load.

The present invention relates to handling support according to claim 1.

In particular, the handling support is designed for handling meat portions or meat cuts. Often, these meat portions are more than several kilograms each. In particular, these meat portions can weigh more than 5 kg each. The handling support can handle several of these meat portions. In particular, the handling support can hold more than four meat portions.

The meat portions can be pressed onto skewers such that the skewers are inserted into the material to be hung up. Thus, no special provisions need to be made for suspending the material. For instance, meat portions are often provided with loops of material, and these loops are hung onto hooks on supports for suspending the meat portions. The meat portions need to be provided with these loops in a separate step. Furthermore the loops can introduce contaminations. The loops can be a source of foreign bodies in meat. At a certain stage, the loops are discarded to produce waste.

In an embodiment, the skewers extend in a direction of said eye, in particular slanted with respect to said upright.

In an embodiment, the skewers comprise a pointed end and a support end, said support end attached to said upright at a distance from said upright, in particular via a rounded part. This allows direction of a large part of the force exerted by the material to be in the longitudinal direction of the support.

In an embodiment, the skewers extend functionally parallel to a longitudinal direction of said handling support, in particular functionally parallel to said upright. This further allows direction a large part of the force exerted by the material to be in the longitudinal direction of the support.

In an embodiment, the handling support comprises said attachment members staggered. Thus, the weight of the material can be spread more evenly along the length of the support.

An upright may be a solid stem having for instance a round or rectangular cross section. Alternatively, an upright may be profile section, for instance having an H-shaped cross section.

In an embodiment, the handling support comprises at least two functionally parallel uprights, said uprights interconnected. In an embodiment thereof, each upright comprises attachment members. In this way, higher strength using less material for the support is possible.

In an embodiment, said uprights define a plane, and wherein said attachment members extend substantially in said plane. Thus, a support can be produced using injection moulding using a more simple, two-part mould.

In an embodiment, said upright is elongated having a longitudinal direction and comprising said eye at one end and said attachment members along said length, in particular said attachment members and said upright defining functionally one plane.

In an embodiment, said attachment members are provided at both sides of said longitudinal direction, in particular said attachment members are provided in a staggered manner. Thus, for instance, when following the support from the eye downward, each time one attachment member is provided extending one way, then an next attachment member is provided extending the opposite way, etcetera and so on.

In an embodiment, the handling support comprises two parallel uprights linked at one end to a reinforced hoop for attaching to an automatic conveying member. A plurality of spacers may ensure that the two uprights are maintained in the parallel position. These uprights including, on an opposite face, a plurality of members for attaching the objects to be conveyed.

This structure with two parallel uprights assembled as ladder uprights makes it possible, while retaining sufficient rigidity, to obtain a handling support that is considerably lighter than the necessarily more bulky supports of the prior art for conveying equivalent loads, as previously described.

In an embodiment, the uprights are in the form of a flat central stem complemented at the edge with laterally positioned perpendicular ribs.

In an embodiment, the top part of the support which supports all the weights and the loads that are attached thereto is reinforced by a widening of the uprights, this widened part being linked by hoops of equivalent width, the whole being provided with double edge ribs complemented with transversal ribs.

In an embodiment, the flat central stem of the uprights has a reinforced thickness in its top part that connects to the attachment head as far as a level from which a more reduced thickness is provided for the rest of the length of the upright according to the load weights that can be attached in this region, the maximum reinforcement by H profile ribs being provided in the top part as far as a given point to be extended as far as the bottom end of the support by a T profile with a single reinforcing rib.

In an embodiment, load attachment tabs are positioned on the external faces of the uprights of the ladder and intended to receive load attachment links. In an embodiment thereof, a safety retaining spur is positioned at the entry to the region of attachment of the load attachment tabs.

The term "substantially" herein, like in "substantially consists", will be understood by and clear to a person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. The term "functionally" is intended to cover deviations in a feature to which it refers which are such that in the functional use of the feature in combination with other features it relates to in the invention, the combination of features is able to operate.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

An exemplary embodiment of a handling support will be described hereinbelow, with reference to the appended drawings, in which:
- Figure 1 represents a perspective overview of such a support,
- Figure 2 shows an enlarged partial view of figure 1 showing attachment members,
- Figure 3 shows alternative attachment members,
- Figure 4 shows a perspective view of another embodiment of a support with a single upright,
- Figure 4a shows an attachment member of figure 4 in cross section;
- Figure 5 shows a perspective view of another embodiment of a support with a single upright,
- Figure 5a shows an attachment member of figure 5 in cross section;
- Figure 6 shows a cross section of an alternative attachment member, and
- Figure 7 shows a cross section of yet another alternative attachment member

### Description of preferred embodiments

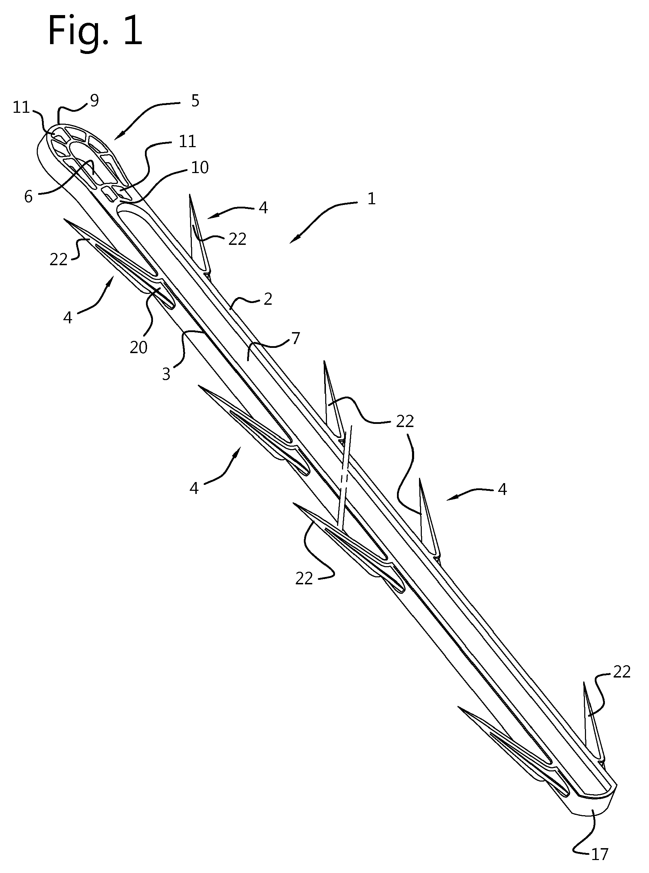

Figure 1 is a perspective view of a handling support 1. In this embodiment, it has two parallel rectilinear uprights 2 and 3 that are interlinked. That can be achieved using a series of spacers or ribs. Here, the uprights are interlinked by a continuous part 7. On the external faces of the uprights 2 and 3, a plurality of attachment members 4 for receiving meat portions that are skewed onto the attachment members 4. Thus, the support is used for instance for suspending cuts of meat in refrigerating conveyor systems. The attachment member 4 has a skewer or pin 22. A skewer 22 may be cone-shaped. The attachment member 4 further comprises a reinforcement rib 20 extending in longitudinal direction. The reinforcement rib strengthens the skewer. The skewer of this embodiment extends in a slanted direction. In an embodiment, the skewer has a length of 6-8 cm.

In this embodiment, the uprights 2 and 3 are here each in the form of a solid, flat stem. Alternatively, a flat central stem complemented at the edge with laterally positioned perpendicular ribs, either along a single edge, forming a T section, or along the two edges, forming an H section. These T or H profiles of the uprights 2 and 3 make it possible to obtain maximum rigidity for a minimum weight of the supports, while providing them with sufficient rigidity for their load support function.

The structure of the support can be adapted to the stresses of the loads to be supported. The top part, which supports all the weights of the support and the loads that are attached thereto, can be reinforced by a widening of the uprights 2 and 3. The top parts of the uprights 2, 3 comprises an attachment head 5 that is here provided with an eye 6. The uprights 2, 3 can be linked by a single hoop. In the embodiment of figure 1, the uprights 2, 3 at the top part are linked by hoops 9 and 10, here of equivalent width. Here, both hoops 9, 10 are provided with double edge ribs complemented with transversal ribs 11, forming a reinforced region of the attachment head as represented in Figure 1.

The uprights 2 and 3 will have a structure suited to the loads to be supported. Their flat central stem can have a reinforced thickness in the top part that connects to the attachment head 5 where the weights are concentrated. From about halfway, the uprights 2, 3 can have a reduced thickness. This can provide for the rest of the length of the upright according to the more reduced load weights that can be attached in this region. Similarly, the maximum reinforcement by H-profile ribs may be provided in the top part as far as halfway, to be extended as far as the bottom end of the support by a T profile with a single reinforcing rib, corresponding to the lesser loads supported by this region.

The top part of the support in this embodiment comprising the double attachment hoop 9 and 10, which supports the totality of the load, support and attached objects. It may be reinforced by a widening of the uprights 2 and 3 and the fact that they are framed by the ribs 11 and the hoops 9 and 10. This reinforced top part can be extended by a top part of the uprights 2 and 3 of reinforced thickness edged with perpendicular ribs 11 forming an H section with maximum resistance to the attachment weights as far as a point halfway after which only one of the ribs is maintained, forming a T section that is sufficient to provide a support for lesser loads while retaining a sufficient rigidity in the bottom part of the support 1.

At their lower ends, the uprights 2,3 are in this embodiment connected via a connecting loop 17.

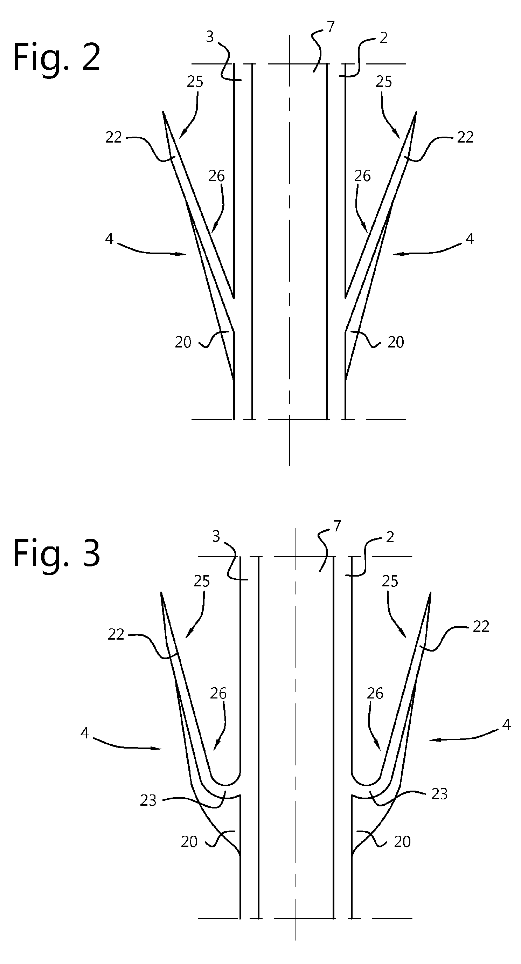

Figures 2 and 3 shows a partial view, in elevation, of some alternative embodiments of the attachment members 4. The uprights 2, 3 can in an other embodiment (not shown) be reinforced with ribs interconnecting the uprights 2, 3, for instance at positions of attachment members 4. With attachment members 4 positioned at opposite uprights 2, 3 at the same height, this providing each time two opposite attachment members 4, this may provide additional strengthening. Alternatively, the attachment members 4 are each time provided in a staggered manner, thus avoiding a heavy load at one position, but spreading the load more equally over the length of the support 1. It also provides a better distribution of volume. At the positions of attachment members 4, bridging ribs may be provided between uprights 2, 3.

In the embodiment of figure 2, the skewers are slanted into an upward direction, pointing towards the attachment head 5.

In the embodiment of figure 3, the skewers 22 are attached to the uprights via a rounded part 23. In the embodiment shown, the rounded part is such that the skewers are still a little slanted away or outward with respect to a longitudinal line of the support 1. The skewers 22 point upward in a direction towards the attachment head 5. In an embodiment, the rounded part is such that the skewers 22 are functionally parallel to the longitudinal direction of the support 1. In an embodiment, the rounded part is dimensioned to provide the skewer 22 at a distance of between 5 mm and 30 mm of its upright 2, 3. In an embodiment, the skewer 22 has a distance of between 5 and 10 mm from its upright 2, 3.

In an embodiment, the skewer 22 as attached to its upright 2, 3 via a coupling end holding the skewer 22 functionally parallel to the longitudinal direction, and with its support end at a distance from its upright 2, 3. In an embodiment, the distance is between 5 and 30 mm, in particular between 5 and 10 mm. The functionally parallel skewer 22 has a reduced load component in a direction perpendicular to the longitudinal direction of the support 1.

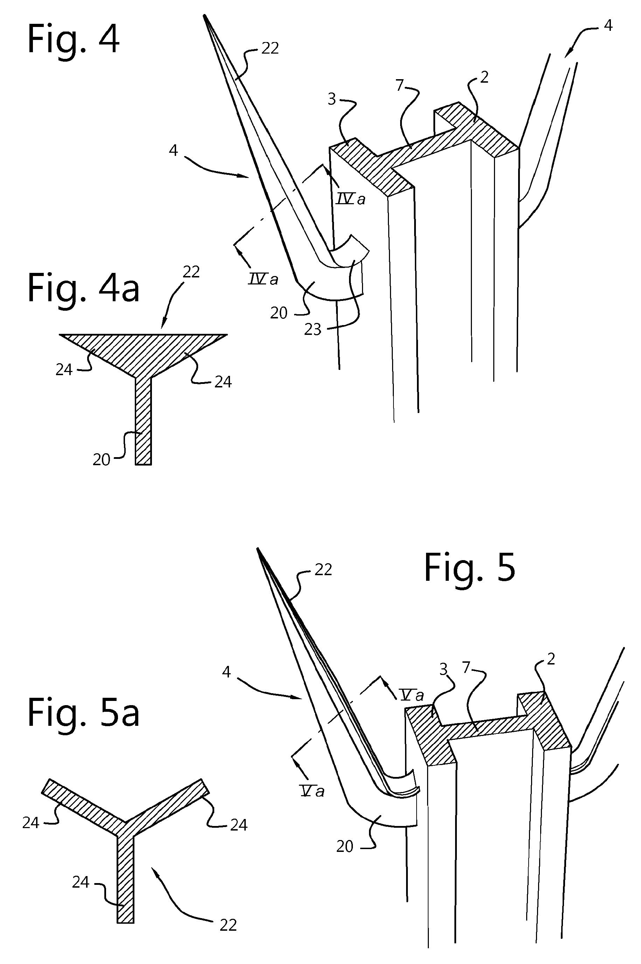

In figure 4, yet another embodiment of the attachment members 4 is shown. In this embodiment, skewer 22 again has a little slanted direction. The skewer 22 has skewer ribs 24 that have cutting ends (see cross section in figure 4a) for providing easier skewing.

In figure 5, the skewer 22 has skewer ribs 24 that are positioned at a mutual angle less than 180 degrees, providing additional strength in a direction away from the longitudinal direction of the support 1. The skewer ribs 24 here have blunt ends, but may me combined with the embodiment of figure 4 and also have similar sharp ends.

The skewers 22 may also be provided with barbs to prevent material from easily letting loose from the skewers. The barbs of alternative friction-increasing elements may be provided on or combined with the skewer ribs 24.

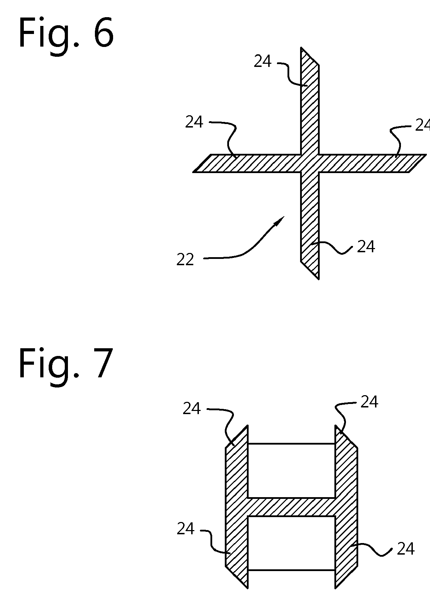

In figures 6 and 7, alternative cross sections of a skewer 22 is provided, at the position indicated in figure 5.

In figure 6, the skewer 22 has a cross-shaped cross section and its skewer ribs 24 have sharp or cutting edges. When oriented as shown, i.e., with skewer ribs 24 in plane with the uprights and skewer ribs perpendicular to the plane formed by the uprights, the embodiment is producible via a two-part injection mould.

In figure 7, a skewer 22 is shown that has an increased bending strength due to its H-shaped cross section. It can have additional reinforcement ribs inside. The orientation is such that the legs of the H are in planes that are functionally perpendicular to a plane defined by the two uprights 2, 3 (i.e., normal to the paper in figures 2 and 3). In this way, the skewers 22 can be produced in a simple 2-part mould. The support is dischargable from an injection mould.

In an embodiment, a height of perpendicular ribs can be reduced from 1.2-1.4 mm to 1.0-1.2 mm. In fact, in this embodiment, the height of the inner perpendicular rib when starting from the hoop, first is equal or essentially equal to the height of the outer rib. Then, beyond the second pair of attachment members 4, the height of the inner ribs is reduced to 7-9 mm. After the third part of attachment members 4, the uprights continue in a T-shape.

In the embodiment, the size of the hoops 9, 10 can be reduced. The attachment members 4 may have extended perpendicular ribs, and the other end of the support can be modified.

The attachment members 4 can be located at the position of spacers or reinforcement ribs. Thus, extended ribs or reinforcement ribs contribute to the rigidity of the uprights 1, 2 and to their connection.

Tests showed that the hoops can extend up to the first attachment members 4. In that way, these first attachment members 4 can continue into hoop 10 which was found to provided additional strength. Thus, the uprights 2, 3 continue up to the first attachment members 4, and from there are connected via an outer hoop 9. The outer hoop 9 has two perpendicular ribs that are interconnected by the transversal ribs 11. In order to provide additional strength and form a eye, the lower hoop 10 is positioned as mentioned at the location of the first attachment members 4 and its upper perpendicular rib continues into the attachment members 4. The lower hoop 10 also has two almost parallel perpendicular ribs and (one) transverse rib 11.

At its opposite end, the uprights 2, 3 continue as or into an end arch 17, and the flat central part 7 connection the uprights 2, 3 continues like the earlier-presented design. This was found to further increase rigidity and strength of the support.

The duly described structural characteristics of load handling supports according to the invention show the possibilities of adapting such supports to a wide variety of loads, by adapting the choice of the constituent material and the dimensions of the various elements. The handling support is made from plastic. In a broad sense, this is a material than can be shaped using hot forming. In particular, plastic relates to a polymer material. This may include reinforced plastic, for instance fiber-reinforced plastic.

The upright can be flexible, as long as it holds the weight of the material parts. The upright may be able to twist about its longitudinal direction.

In an embodiment, the plastic material is injection mouldable. This material will advantageously be a plastic material that can be moulded by injection into a mould with a single flat joint plane, all the upright and rib shapes being able to be stripped directly from the moulds, resulting in a lower manufacturing cost. The material in an embodiment is a food-grade polymer. The material can for instance be nylon (polyamide), PE (polyethene), PC (polycarbonate) or PP (polypropene). The design allows the support to carry loads of meat of between 100 and 200 kg. In particular, it allows it to safely carry between 150 and 180 kg of meat, for instance hams. The support can be between 1.0 and 1.5 m long. It was found that in the embodiment of figures 1-3 can carry up to 150 kg of meat and have a weight of between 130 and 100 gr. In particular, embodiments can carry up to 170 kg of meat. It can have an even more reduced weight, resulting in a support of between 80 and 100 gr.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference numbers

1 handling support
2, 3 uprights
4 attachment member
5 attachment head
6 eye
7 upright connection/ central part
9 outer hoop
10 lower hoop
11 perpendicular ribs
17 end arch
20 reinforcement rib
22 skewer
23 rounded part
24 skewer ribs
25 skewer pointed end
26 skewer support end

## Claims

1. Handling support (1) for conveying material parts, in particular meat portions, and comprising an upright (2, 3) linked at one end to an eye (6) for attaching to an automatic conveying member, the upright including a plurality of attachment members (4) for attaching the material parts to be conveyed, wherein said handling support (1) is made as one part from plastic and wherein said attachment members (4) comprise skewers (22) which comprise a pointed end (25) at a distance from said upright (2, 3) for allowing skewing said material parts onto said handling support (1).

2. Handling support (1) for conveying objects according to Claim 1, **characterized in that** said skewers (22) extend in a direction of said eye (6), in particular slanted with respect to said upright (2, 3).

3. Handling support (1) for conveying objects according to Claims 1-3, **characterized in that** the skewers (22) comprise a pointed end (25) and a support end (26), said support end (26) attached to said upright (2, 3) at a distance from said upright, in particular via a rounded part (23).

4. Handling support (1) for conveying objects according to any one of the preceding Claims, **characterized in that** the skewers (22) extend functionally parallel to a longitudinal direction of said handling support (1), in particular functionally parallel to said upright (2, 3).

5. Handling support (1) for conveying objects according to any one of the preceding Claims, **characterized in that** said handling support comprises said attachment members (4) staggered.

6. Handling support (1) for conveying objects according to any one of the preceding Claims, **characterized in that** said handling support comprises at least two functionally parallel uprights (2, 3), said uprights (2, 3) interconnected.

7. Handling support (1) of claim 6, wherein each upright (2, 3) comprises attachment members (4).

8. Handing support (1) of claims 6 or 7, wherein said uprights (2, 3) define a plane, and wherein said attachment members (4) extend substantially in said plane.

9. Handling support (1) according to any one of the preceding claims, wherein said upright (2, 3) is elongated having a longitudinal direction and comprising said eye (6) at one end and said attachment members (4) along said length, in particular said attachment members and said upright defining functionally one plane.

10. Handling support (1) according to claim 9, wherein said attachment members (4) are provided at both sides of said longitudinal direction, in particular said attachment members are provided in a staggered manner.
